# EUROPEAN PATENT APPLICATION

(11) **EP 1 758 014 A2**
(43) Date of publication of application: **28.02.2007**
(21) Application number: 06076338.0
(22) Date of filing: 30.06.2006
(51) Int. Cl.: G06F 3/048

(54) **System and method for scrolling through a list**

(30) Priority: 02.08.2005 US 194999
(71) Applicant: Delphi Technologies, Inc., Troy, Michigan 48007 (US)
(72) Inventor: Casto, Paul D., Kokomo, IN 46902 (US)
(74) Representative: Denton, Michael John

(57) **Abstract**

A system (20) and method for scrolling through a list of labels (24). The format in which labels (24) are displayed can be influenced by the current "search state" of the system (20). The current "search state" of the system (20) can be influenced by a speed metric (48). The speed metric (48) can be captured from the interactions between a user (36) and a controller component (40) for a device utilizing the system (20). In some embodiments of the system (20), search states (52) are predefined in accordance to speed ranges (54) that are associated with the search states (52). In other embodiments, a user profile (46) can customize the applicable search states (52) for a particular user (36).

## Description

### BACKGROUND OF THE INVENTION

The invention relates generally to systems and methods (collectively the "system") for scrolling through a list.

Human beings interact with an increasing number of different devices. Many of those interactions involve "scrolling" through a list of items to select the desired item. For example, there are numerous different MP3 players available to consumers that are capable of storing thousands of different songs. Given the portability of such devices, the devices are often quite small, and thus such devices often possess relatively small display panels. In some contexts, the display panel is only large enough to display a single line of information. In other contexts, more than a single line can be displayed, but the display capacity of the device is nonetheless dwarfed by the total volume of available information.

### SUMMARY OF THE INVENTION

The invention relates generally to systems and methods (collectively the "system") for scrolling through a list.

A device using the system can selectively and automatically modify the format in which a label in the list is displayed. The selective modifications to a display format can be influenced by a current search state that is identified from a variety of search states defined within the system. A speed metric, a measurement relating to the speed in which a user is scrolling through the list, can influence the current search state of the system.

The system can be more fully understood upon reading the following detailed description in conjunction with the accompanying drawings.

### BRIEF DESCRIPTION OF THE DRAWINGS

Figure 1 is a block diagram illustrating some examples of elements that can be included in the system for scrolling through a list of labels.
Figure 2 is a block diagram illustrating an example of a subsystem-level view of the system.
Figure 3 is a block diagram illustrating an example of a subsystem-level view of the system.
Figure 4 is a flow chart diagram illustrating an example of a process to selectively modify the display format of a label.
Figure 5 is a flow chart diagram illustrating an example of a process to selectively modify the display format of a label.
Figure 6 is a flow chart diagram illustrating an example of a process for configuring a device using the system.

### DESCRIPTION OF THE PREFERRED EMBODIMENTS

### I. OVERVIEW

The invention relates generally to systems and methods (collectively the "system") for scrolling through a list.

The system uses a format heuristic to selectively influence the manner in which a label is displayed in the list being searched. The system captures a speed metric from the interactions of the user with the scrolling list. The speed metric can influence what is determined to be the current "search state" of the system. The current "search state" can influence the manner and degree to which the format heuristic influences the display of a label in the list.

Different embodiments of the system can involve a different number of different search states. Search states can be defined as speed ranges, with one search state being identified as the current search state on the basis of the speed metric falling within the speed range associated with that search state. In some embodiments, search states are predefined by the manufacturer of the applicable device. In other embodiments, search states can be influenced or even entirely defined and customized by users. A user profile can be used to customize the format heuristic, which controls the nature and extent to which display formats for labels are selectively modified, the number of different search states, and the range of speed metrics that make up a particular search state.

By way of example, without limitation, in the context of an MP3 player, a label consisting of an artist's name and a song title could be formatted differently, depending on the current "search state." As illustrated in **Table 1**, in a stopped state or in a slow state, the player can manifest (by visual display or audibly reproducing) display "Artist Name - Song Title." In a medium state (e.g., Medium1 or Medium2), that same label could instead be manifested as "Artist Name - S*********," or alternatively as "Artist Name ***************." In a fast state, that label could be further truncated as "A**************************.'"

**Table 1**

| **Search State** | **Displayed Label** |
|---|---|
| Stopped | Artist Name - Song Title |
| Slow | Artist Name - Song Title |
| Medium1 | Artist Name - S********* |
| Medium2 | Artist Name ************ |
| Fast | A*********************** |

Different embodiments of the system can involve different "search states" and different ways of modifying display formats for a label.

There are a wide variety of different devices that can involve the activity of scrolling through a list. Both consumer devices and industrial devices can involve the task of scrolling through a list, and making a selection. Examples of devices that can include the functionality of the system include: MP3 players; cell phone address books; handheld electronic games; pocket computers; industrial, transportation, and other forms of embedded computers; desktop computers; industrial controls; and many other types of devices (collectively "devices") can benefit from the system.

In addition to accommodating a wide variety of different devices, the system can also accommodate a wide variety of different output components. Some output components are limited to a display capacity of a single line, while in other embodiments, each individual label may individually require multiple lines, with several labels being displayed in a simultaneous or substantially simultaneous manner.

### II. INTRODUCTION OF ELEMENTS

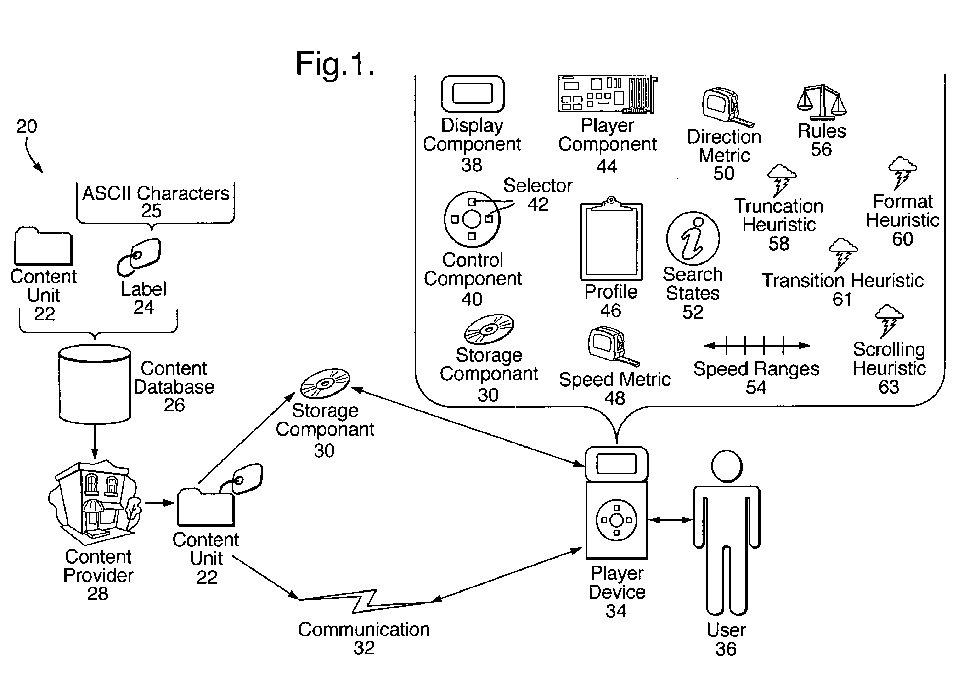

Figure 1 is a block diagram illustrating some examples of elements that can be included in a system 20 for scrolling through a list of labels 24. The specific example illustrated in Figure 1 pertains to a media player 34 or other form of portable consumer device. As discussed above, other embodiments of the system 20 can involve a wide variety of different device types, fulfilling different functions, and providing different types of information in lists to be scrolled through by a user 36.

### a) Content Units

A content unit 22 is a unit of content that is played or otherwise accessed on the host device, such as a player device 34. In an embodiment of the system 20 in which music is played, a content unit 22 is typically an individual song. In other media player embodiments of the system 20, a content unit 22 could be an entire album, a portion of an individual song, a movie, a scene within a movie, a video game, a particular section within a video game, or any other unit of content capable of being played on the player device 34. In some embodiments, the scope of the content unit 22 can be defined by a user 36. For example, an individual user 36 could "break down" a song into several sections, with each section constituting a distinct content unit 22.

In non-media playing embodiments of the system 20, content units 22 relate to the different options that a user 36 can select with respect to the particular device. For example, in an industrial device, users 36 may need to select from various settings and configurations that relate to the functionality of the device.

### b) Labels

A label 24 is metadata or any information that is associated with a content unit 22. A label 24 is often a digital label that is embedded into a content unit 22. In the example of a music playing device, a label 24 can potentially include the name of the song, the name of the artist, the name of the album, the year that the song or album was published, the producer of the album, and virtually any other information relating to the content unit 22. Different types of content units 22 can involve different types of information being included within a label 24. For example, in a movie playing context, the label 24 could include information about the director and/or actors, and in a videogame playing context, the label 24 could include a current score. The types of information that can be incorporated into a label 24 are potentially limitless. A content provider 28 or some other entity involved in distributing the content unit 22 will often be the decision maker with respect to what types of information should be included within labels 24 for a particular embodiment of the system 20. In other embodiments, the user 36 through the use of a user profile 46 can influence the contents of the label 24.

### c) Characters

The information in a label 24 is often embodied in a string of ASCII characters 25. A single label 22 can include a potentially limitless number of characters, although a output component 38 will often have a finite display capacity. In some embodiments of the system 20, only alphanumeric characters can be included in a label 24.

### d) Content Database

A database 26 of content, which can also be referred to as a content database 26, can be used by system 20 to store content units 22, labels 24, and associations between units 22 and labels 24. The content units 22 and labels 24 stored in one or more content databases 26 used by the system 20 can be made accessible to a user 36 in many different ways using many different types of technologies. The content units 22 and labels 24 within the content database 26 can be distributed in a variety of different ways, some of which are identified below.

The system 20 can include a wide variety of different content databases 26 operated and controlled by one or more content providers 28.

### e) Content Providers

The system 20 can be used to distribute content units 22 from one or more content providers 28. Content providers 28 can also be referred to as providers 28. Some content providers 28 may focus on a single type of content unit 22 such as music, while others may be involved in many different types of content units 22.

Content providers 28 can also distribute content units 22 in a wide variety of different ways using a wide variety of different technologies. As illustrated in the Figure, content units 22 are associated with labels 24 before the content units 22 are distributed to users 36.

### 1. Storage Components

One category of distribution techniques is the use of a storage component 30 that is distributed to users 36. For example, music content units 22 can be distributed in the form of cassette tapes, records, CDs, DVDs, MP3 files, etc. Any mechanism capable of storing a content unit 22 can constitute a storage component 30. It is anticipated that new and improved storage components 30 will be created in the future, and that the system 20 will incorporate such advances.

### 2. Communications

Another category of distribution techniques involves the transmission of a content unit 22 from a remote source using a communication 32. For example, music content units 22 can be transmitted to users 36 via satellite radio communications 32. A communication 32 can include any technology or process for exchanging information between a source device and a recipient device. Radio, satellite radio, broadcast television, cable television, computer networks, and the Internet are common examples of communications 32. It is anticipated that new and improved communications 32 will be created in the future, and that the system 20 will incorporate such advances.

### f) Player Device

A player device 34 is any device capable of "playing" or otherwise using or benefiting from a content unit 22 and/or displaying a list of labels 24. The variety of player devices 34 is commensurate to the variety of different types of content units 22. Player devices 34 can also be referred to as players 34. Many players 34 can be also be referred to as media players 34.

Examples of players 34 can include radios, satellite radios, CD players, DVD players, PDAs, cell phones, portable music players, laptop computers, desktop computers, and a variety of other portable and stationary devices.

Regardless of the particular type of player 34. a player 34 typically includes a output component 38, a control component 40, and a player component 44.

As discussed above, the system 20 is not limited to player devices 34 or even to consumer devices. Industrial devices can also incorporate the processing of the system 20.

### 1. User Interface Component

A user interface component 38 is the means by which the label 24 is made manifest to the user 36. In most of the examples set forth herein, the display component 38 is discussed in the context of visible indicia; however, it is contemplated that an audio device (i.e., speaker) can be used to make the label information audibly accessible to the user with or without a visual component. Such an audio device would benefit the visually impaired or benefit any user when the player device is used in low-light conditions.

In some music playing embodiments, a small output component 38 will simply display (or audibly reproduce) the name of the song currently being played by the player 34. Such a player 34 could be further limited by a display capacity of a single line. On the other end of the continuum, other embodiments of the system 20 can involve display capacities of multiple labels 24 with each label 24 requiring multiple lines to display.
An example of single line display is:
"Artist Name - Song Name."
An example of a multiple line display is:
"Artist Name."
"Song Name."
"Album Title."

### 2. Control Component

A control component 40 is the means by which users 36 interact with the player 34 and provide their instructions to the player 34. Different embodiments of players 34 can involve a wide variety of different control components 40. Control components 40 can also be referred to as controllers 40.

Controllers 40 can involve different types of buttons, switches, knobs, wheels, dials, voice recognition components, and other types of physical and electronic mechanisms for receiving instructions from users 36 (collectively "selector" 42).

For example, in an embodiment of the system 20 that involves a satellite radio player 34, selector 42 can be used to change the channel and the volume of the player 34. The control component 40 can be used to capture a speed metric 48 and a direction metric 50.

### 3. Player Component

A player component 44 is the component of the player device 34 that allows the player device 34 to access the content unit 22, which is often stored on a storage component 30. For example, in the example of a CD player, the player component 44 is the mechanism within the CD player that actually reads the information located on the CD. In the context of a player 34 accessing content units 22 from a remote source such as a satellite radio station, the player component 44 is the electronics within the player 34 that allows the player 34 to access the satellite signal. A player component 44 can also be referred to as a content access component 44.

In non-player embodiments of the system 20, the player component 44 is the component within the device that performs the function of the device.

### 4. Profiles

A profile 46 is a bundle of information stored within the player 34 that relates to user preferences for a particular user 36 or a particular group of users 36. For example, a profile 46 could include information relating to speed preferences for or historical speed attributes of a particular user 36. Different profiles 46 can define different search states 52 with different speed ranges 54.

Profiles 46 can influence which content units 36 made accessible to the user 36, as well as the ways content units 36 are organized within the player 34. For example, one user 36 might prefer classical music while another user 36 prefers jazz. One user 36 might prefer to listen to music at a relatively quiet volume while another user 36 might prefer a substantially louder volume.

### 5. Speed Metric

A speed metric 48 is a measurement relating to the speed in which a user 36 is scrolling through the list of labels 24. The system 20 can capture the speed metric 48 in a variety of different ways. Some embodiments of the system 20 can include more than one speed metric 48.

In many embodiments of the system 20, the speed metric 48 is the period of time (usually measured in milliseconds) between movements of the selector from one label 24 in the list to another label 24 in the list. The speed metric 48 is often an important input to the system 20 for determining the current search state.

### 6. Direction Metric

A direction metric 50 can be captured simultaneously or substantially simultaneously with the capture of the speed metric 48. Both the speed metric 48 and the direction metric 50 are captured through user 36 interactions with the selector 42 of the control component 44.

In many embodiments, the direction metric 50 relates to the scrolling direction within the list. In other embodiments, the direction metric 50 can relate to more complex directional information. In some embodiments of the system 20, the direction metric 50 is an input to a transition heuristic 61, as discussed below.

### 7. Search States

A search state 52 can also be referred to as a search mode or a search status. Different embodiments of the system 20 will have different search states 52. There are typically two or more potential search states 52 in most embodiments of the system 20. In many embodiments, the current search state is identified from the pool of potential search states 52 using one or more speed metrics 48 as the sole form as input. In other embodiments, the speed metric 48 is merely one input into the process of determining which search state 52 is the current search state 52.

### 8. Speed Ranges

In many embodiments of the system 20, search states 52 are defined with respect to a speed range 54 that can be compared to the speed metric 48. Different embodiments of the system 20 can involve different search states 52 and different speed ranges 54 associated with those search states 52.

In embodiments of the system 20 involving four predefined search states 52, search states 52 could be associated with speed ranges 54 as illustrated in **Table 2**.

**Table 2**

| **Search State** | **Speed Range** |
|---|---|
| Stopped | Greater than about 750 ms per click |
| Slow | Between about 90 ms and 750 ms per click |
| Medium | Between about 30 ms and 90 ms per click |
| Fast | Less than about 30 ms per click |

### 9. Rules

A rule 56 is a processing rule of the system 20 that cannot be altered by users 36. Processing rules 56 constrain the possible options available to users 36 in creating profiles 46 and in defining search states 52 and speed ranges 54, as well as various heuristics discussed below. In some embodiments of the system 20, there is no user profile 46.

### 10. Truncation Heuristic

A truncation heuristic 58 is a type of format heuristic 60 discussed below. The truncation heuristic 58 may be used to modify the display format by truncating the label 24 wherein characters 25 are replaced with placeholders such as an "*" or a "-". The selective modification of characters 25 can be done from a left to right direction, from a left to right direction, or in accordance with some other processing rule 56.

**Table 1** above provides some examples of processing that can be performed using the truncation heuristic 58.

### 11. Format Heuristic

A format heuristic 60 is a process which may be implemented by the system 20 that can selectively modify the display of a label 24 depending on the currently selected search state 52. The truncation heuristic 58 is an example of a format heuristic 60. The format heuristic 60 can also involve sounds, colors, graphics, and virtually any other means of communicating with users 36.

### 12. Transition Heuristic

A transition heuristic 62 is a process implemented by the system 20 that can change the current search state from one search state 52 to another search state 52. For example, certain search states 52 can be associated with certain rules 56 that impact the transition from one search state 52 to another search state 52.

For example, some embodiments of the system 20 can be configured to not change to a slower search state so long as the selector 42 keeps moving (i.e. the only change to a slower search state occurs if the system 20 would otherwise enter a search state of "stopped"). In such embodiments, the system 20 can be configured to allow changes to faster search states 52 without impediment.

Different embodiments of the system 20 may hinder or configure transitions between search states 52 differently.

### 13. Scrolling Heuristic

A scrolling heuristic 63 is a process implemented by the system 20 that impacts the way in which users 36 scroll through a list of labels 24. For example, the scrolling heuristic 63 can operate so that a user 36 is not forced to advance the selector 42 one click per entry (e.g. label 24). The number of labels advanced by a single click can be determined by the current search state 52 of the system 20. For example, in a "fast" search state 52, the entire label 24 except for the first character 25 can be filled with a placeholder. Each click of the selector 42 switches to the next displayed character, even though a single character may represent multiple labels 24. Truncations with respect to the "medium" and "slow" search states 52 can similarly form the basis for accelerated scrolling.

### g) Users

A user 36 is typically a human being, although animals and machines can also potentially be users 36. Users 36 are often the beneficiaries and/or recipients of the content units 22 played on the player 34. In other embodiments, users 36 are merely the operators of the device (such as in industrial embodiments) embodying the system 20.

### III. SUBSYSTEM VIEWS

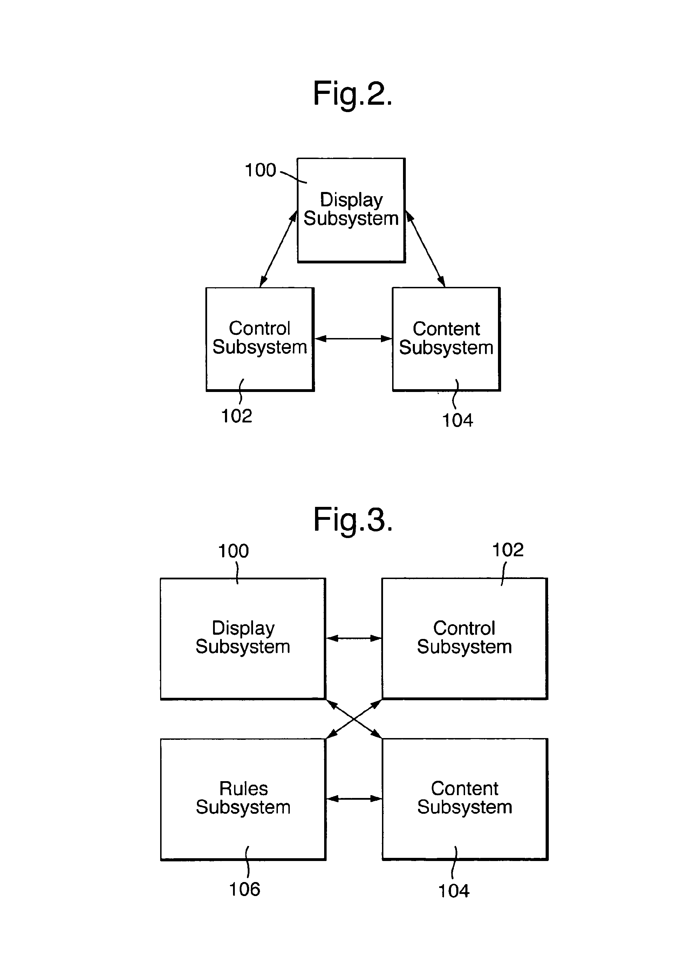

Figure 2 is a block diagram illustrating an example of a subsystem-level view of a system 20. As indicated by the arrows originating from and pointing towards the various subsystems, each subsystem can interact and communicate with any other subsystem.

### a) Output Subsystem

An output subsystem 100 is the subsystem by which labels 24 and other information relating to particular content units 22 are made manifest to users 36. Subsystem 100 may be a visible system, an audio system or both. The output subsystem 100 may include a output component 38. It is through the output subsystem 100 that the impact of truncation heuristics 58, format heuristics 60, and scrolling heuristics 63 are made manifest to users 36.

The output subsystem 100 manifests information originating from a content subsystem 104 as selectively modified by user interactions received through a control subsystem 102.

An external light may be used to illuminate the output component 38 (for indicia based components 38). In some embodiments, the output subsystem 100 may include multiple light sources. In some embodiments, the output subsystem 100 can be configured to modify the luminosity of a light source, and influence the light source in ways beyond the mere activation or deactivation of the light source.

### b) Control Subsystem

A control subsystem 102 can also be referred to an interaction, interface or controller subsystem 102 because it is the means by which users 36 interact with the system 20. In some embodiments, the control subsystem 102 allows users 36 to expressly configure the functionality of the system 20. The control subsystem 102 can be used to create, modify, and delete profiles 46. The control subsystem 102 includes the control component 40 and the selector 42, and all means for interactions between the system 20 and the user 36. Metrics such as the direction metric 50 and the speed metric 48 are captured through the control subsystem 102.

The control subsystem 102 allows information to be retrieved from the content subsystem 104 and made accessible to users 36 through the display subsystem 100.

### c) Content Subsystem

A content subsystem 104 is the subsystem by which content units 22 and labels 24 are accessed by the system 20. The content subsystem 104 can also include the player component 44 and the storage component 30. The content subsystem 104 provides the information that is displayed through the display subsystem 100, and interacted with through the control subsystem 102.

### d) Rules Subsystem

Figure 3 is a block diagram illustrating an example of a subsystem-level view of a system 20 for playing media content units 22. Figure 3 includes a rules subsystem 106 that can be configured to ultimately control how the various user 36 interactions with the system 20 influence the processing of the system 20. The rules subsystem 106 can include the rules 56, the truncation heuristic 58, the format heuristic 60, the transition heuristic 61, and the scrolling heuristic 63. In other embodiments of the system 20, those heuristics can be located within the control subsystem 102 and/or the output subsystem 100.

### IV. PROCESS FLOW VIEWS

### a) Example 1:

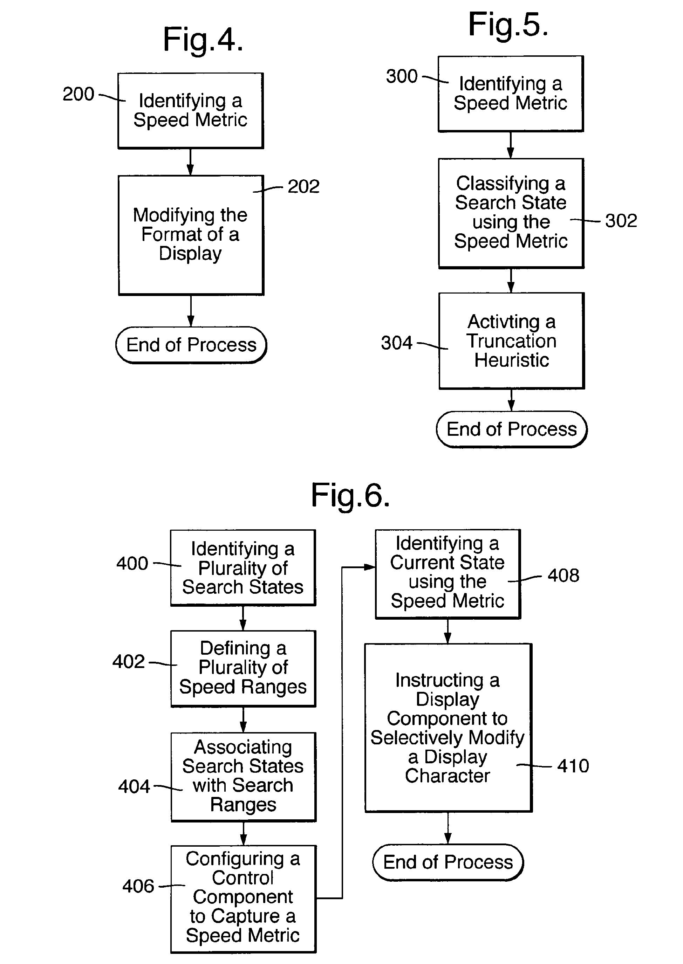

Figure 4 is a flow chart diagram illustrating an example of a process to selectively modify the display format of a label 24.

At 200, a speed metric 48 is identified.

At 202, the format of a displayed label 24 is selectively modified. The modifications are influenced by the speed metric 48.

### b) Example 2:

Figure 5 is a flow chart diagram illustrating an example of a process to selectively modify the display format of a label 24.

At 300, at least one speed metric is identified 300. As discussed above, in many embodiments of the system 20, the speed metric 48 is a measure of time between user interactions with the selector 42.

At 302, a current search state 52 is classified by comparing one or more speed metrics 48 to one or more speed ranges 54. Table 2 (displayed above) provides an example of different speed ranges 54 that can be associated with different search states 52.

At 304, a truncation heuristic 61 can selectively modify the display format of the label 24 being currently displayed. In other embodiments, other aspects of the format heuristic 63 can also be invoked. Table 1 (displayed above) provides an example of different display formats that can be influenced by the current search state 52.

### c) Example 3:

Figure 6 is a flow chart diagram illustrating an example of a process for configuring a device using the system 20.

At 400, various potential search states 52 can be identified. The number of search states 52 can vary between different embodiments of the system 20. Typically, the system 20 will have at least two search states 52. There is virtually no limit to the number of potential search states 52 that can be supported by the system 20. Examples of search states 52 can be found in both Table 1 and Table 2, as disclosed above.

At 402, a plurality of speed ranges 54 can be defined. Examples of speed ranges 54 are displayed in Table 2, disclosed above. The speed ranges 54 can be defined using empirical evidence captured from the specific context of the applicable device.

At 404, speed ranges 54 can be associated with search states 52 for the purpose of future state determinations using the speed metric 48 as an input.

At 406, a control component 40 can be configured to capture the speed metric 48. In some embodiments, the control component 40 is also configured to capture the direction metric 50.

At 408, the process for identifying a current search state using the speed metric 48 is configured into the system 20.

At 410, the process for instructing a output component 38 to selectively modify a display character within the current label 24 is configured into the system 20. An example of the display modifications of the truncation heuristic 61 is provided in Table 2 above. Other modifications can be incorporated through a format heuristic 60, as discussed above.

### V. ALTERNATIVE EMBODIMENTS

In accordance with the provisions of the patent statutes, the principles and modes of operation of this invention have been explained and illustrated in preferred embodiments. However, it must be understood that this invention may be practiced otherwise than is specifically explained and illustrated without departing from its spirit or scope.

## Claims

1. A device, comprising:
a plurality of search states (52), said plurality of search states (52) including a current state;
a controller component (40), wherein said controller component (40) provides for capturing a speed metric (48), wherein said controller component (40) provides for scrolling through a plurality of labels (24), wherein said current state is influenced by said speed metric (48); and
an output component (38), wherein said output component (38) provides for manifesting the contents of at least one said label (24), wherein the manifesting of said label contents (24) is influenced by said current state.

2. The device of claim 1, further comprising:
a storage component (30), wherein said storage component (30) provides for a plurality of content units (22), wherein at least one said label (24) is associated with at least one said content unit (22);
wherein said current state is identified from said plurality of search states (52) in accordance with said speed metric (48).

3. The device of claim 2, wherein said plurality of content units (22) are digital recordings of music.

4. The device of claim 2, further comprising a plurality of speed ranges (54), wherein each said search state (52) is associated with at least one said speed range (54).

5. The device of claim 4, wherein said plurality of speed ranges (54) are predefined.

6. The device of claim 1, wherein said plurality of search states (52) include a stopped state, a slow state, a medium state, and a fast state.

7. The device of claim 1, wherein said display component (38) has a manifesting capacity of one said label (24).

8. The device of claim 1, wherein said controller component (40) further provides for capturing a direction metric (50).

9. The device of claim 1, wherein said plurality of labels (24) includes a currently manifested label, wherein said currently manifested label is manifested in accordance with a truncation heuristic (58) and a current state.

10. The device of claim 9, wherein said currently manifested label (24) includes a plurality of manifested characters (25), wherein said truncation heuristic (58) provides for selectively replacing characters (25) in said currently displayed label.

11. A portable media playing device (34), comprising:
a plurality of search states (52), wherein said plurality of search states (52) includes a current state, a first state, a second state, and a third state;
a storage component (30), wherein said storage component (30) provides for a plurality of media content units (22) and a plurality of labels (24), wherein each said media content unit (22) is associated with at least one said label (24), wherein at least one said label (24) is a current label;
a controller component (40), wherein said controller component (40) provides for capturing a speed metric (48) and a direction metric (50), wherein said controller component (40) provides for scrolling through said plurality of labels (24), wherein said current state is influenced by said speed metric (48); and
a display component (38), wherein said display component (38) provides for displaying at lease one said label (24), wherein the display of said label (24) is influenced by said current state, wherein said current label is configured to be fully displayed in said third state, wherein said current label is configured to be partial displayed in said first state and in said second state, and wherein less of said current label is displayed in said first state than in said second state.

12. A method for configuring a device, comprising:
identifying (400) a plurality of search states (52), including a first state and a second state;
defining (402) a plurality of speed ranges (54), including a first range and a second range;
associating (404) said first state with said first range and said second state with said second range;
configuring (406) a control component (40) to capture a speed metric (48), wherein the speed metric (48) identifies a current state from the plurality of states (52); and
instructing (408) a display component (38) to selectively modify a display character (25) depending on the current state.

13. The method of claim 12, wherein the plurality of display characters (25) are modified from right to left.

14. The method of claim 12, wherein the display component (38) has a display capacity of one line.

15. The method of claim 12, wherein the device is a music player.

16. The method of claim 12, wherein the plurality of display characters (25) are alphanumeric characters.

17. The method of claim 12, further comprising creating a plurality of display formats that are associated with a plurality of search states (52).

18. The method of claim 12, further comprising installing a modifiable user profile (46).

19. The method of claim 18, further comprising installing a plurality of modifiable user profiles (46).

20. The method of claim 12, further comprising loading a plurality of content units (22) into the device (34), wherein each content unit (22) is associated with a label (25) configured to be viewable by the display component (38).
